Europäisches Patentamt

European Patent Office

Office européen des brevets

(19)

(11) Veröffentlichungsnummer : **0 073 897**
**B1**

(12) # EUROPÄISCHE PATENTSCHRIFT

(45) Veröffentlichungstag der Patentschrift :
· 13.03.85

(21) Anmeldenummer : 82106074.6

(22) Anmeldetag : 07.07.82

(51) Int. Cl.⁴ : **F 16 D 55/28, B 61 H 5/00**

(54) Scheibenbremse mit wenigstens einem kreisscheibenförmigen Bremsbelag.

(30) Priorität : 02.09.81 DE 3134793

(43) Veröffentlichungstag der Anmeldung :
16.03.83 Patentblatt 83/11

(45) Bekanntmachung des Hinweises auf die Patenterteilung : 13.03.85 Patentblatt 85/11

(84) Benannte Vertragsstaaten :
AT DE FR IT

(56) Entgegenhaltungen :
DE-B- 1 151 831
DE-B- 1 152 028

(73) Patentinhaber : Knorr-Bremse GmbH
Moosacher Strasse 80
D-8000 München 40 (DE)

(72) Erfinder : Wirth, Xaver, Dr.
Birkhuhnweg 18
D-8045 Ismaning (DE)

EP 0 073 897 B1

## Beschreibung

Die Erfindung bezieht sich auf eine Scheibenbremse mit wenigstens einem in einem beweglich gelagerten Bremsbelaghalter gehaltenen, vermittels einer Zuspannvorrichtung an eine ringförmige Reibfläche einer Bremsscheibe anpreßbaren, im wesentlichen kreisscheibenförmigen Bremsbelag mit zur Reibfläche senkrecht verlaufender Achse für die Kreisform.

Aufgrund zahlreicher Einflüsse auf das Verschleißverhalten der Reibpaarung Bremsscheibe/Bremsbelag, wie beispielsweise Gleitgeschwindigkeit, Scheibenradius, Temperatur usw., unterliegt ein im Flächenschwerpunkt des Bremsbelages kraftbeaufschlagter Bremsbelag einem sog. Schrägverschleiß. Durch Verschieben der Krafteinleitungsstelle entsprechend theoretischer Überlegungen oder experimenteller Erfahrungen läßt sich für nach bestimmten Programmen betätigbare Scheibenbremsen der Schrägverschleiß reduzieren. Es sind auch kinematische Zwangsführungen für die Bremsbelaghalter zum Vermeiden eines Schrägverschleisses bekannt.

Die bekannten, vorstehend prinzipiell erwähnten Mittel zum Vermeiden von Schrägverschleiß sind jedoch unbefriedigend, da durch von der vorgesehenen Art abweichende Beanspruchungen der Scheibenbremse wiederum Schrägverschleiß auftreten kann und die Zwangsführung zusätzlichen konstruktiven Aufwand, insbesondere bei Berücksichtigung nicht auszuschließender Schrägstellungen der Bremsscheibe, erfordert.

Ein weiterer, beim Schrägverschleiß von Scheibenbremsen zu berücksichtigender Effekt ist im durch den Abstand zwischen resultierender, am Bremsbelag angreifender Reibkraft und der Befestigung des Bremsbelages resultierenden Drehmoment zu sehen, welches den Bremsbelag um eine zur Bremsscheibe radiale Drehachse zu drehen versucht und einlaufseitig am Bremsbelag einen erhöhten Verschleiß bedingen kann. Bei für beide Drehrichtungen der Bremsscheibe eingesetzten Scheibenbremsen kann hierdurch in Umfangsrichtung der Bremsscheibe ein bogenförmiger Verschleiß der Bremsbeläge bewirkt werden, so daß eine gleichmäßige Anpressung des Bremsbelages über seine ganze Fläche an die Bremsscheibe ausgeschlossen ist. Zum Beheben dieses Schrägverschleisses stehen ebenfalls prinzipiell die vorstehend erwähnten Mittel zur Verfügung.

Infolge der Wärmeausdehnung des Werkstoffes des Bremsbelages ist eine konstante Flächenpressung zwischen Bremsscheibe und Bremsbelag — vor allem bei härteren Bremsbelagqualitäten — nahezu ausgeschlossen. Auch die bekannte Aufteilung eines Bremsbelages in einzelne Bremsbelagelemente bringt hier keine Abhilfe, wenn die einzelnen Bremsbelagelemente auf einer steifen, ebenen Unterlage aufliegen : Eine zufällig entstandene Temperaturdifferenz zwischen zwei Bremsbelagelementen führt hierbei infolge der Wärmeausdehnung zu einer höheren Flächenpressung des wärmeren Bremsbelagelementes, wodurch diesem vermehrt Energie zugeführt und seine Temperatur weiter gesteigert wird. Die Folge davon sind sog. Heißstellen auf dem Bremsbelag und der Bremsscheibe, was zu einem vorzeitigen Verschleiß oder einer Zerstörung der Reibpartner führen kann und einer optimalen Materialausnutzung, insbesondere hinsichtlich des Bremsbelages, im Wege steht.

Aus der DE-B-1 152 028 ist eine Scheibenbremse mit im wesentlichen den eingangs genannten Merkmalen bekannt, bei welcher zum Vermeiden eines Schrägverschleisses des Bremsbelages der Bremsbelaghalter um vom jeweiligen Verschleißzustand des Bremsbelages abhängige Wegstrecken in Drehrichtung der Bremsscheibe verschieblich gelagert ist, wobei zugleich der Bremsbelaghalter in Drehrichtung der Bremsscheibe über eine Schrägfläche abgestützt ist, derart, daß auf den Bremsbelaghalter eine schräg zur Bremsscheibe hingerichtete Abstützkraft einwirkt. Bei dieser Scheibenbremse ist jedoch eine genaue, klapperfreie Führung des Bremsbelaghalters ausgeschlossen, dieser weist vielmehr in Umfangsrichtung der Bremsscheibe ein mit dem Belagverschleiß wachsendes Bewegungsspiel auf und zwischen der Zuspannvorrichtung und dem Bremsbelaghalter treten ebenfalls verschleißbedingende Reibbewegungen auf.

Gemäß DE-B-1 151 831 ist es weiterhin bekannt, einen Bremsbelag in mehrere Belagabschnitte aufzuteilen, welche ggf. über voneinander gesonderte Bremsbelaghalter beweglich an den Enden eines Ausgleichshebels angelenkt sind, welcher in seinem mittleren Bereich beweglich mit der Zuspannvorrichtung verbunden ist. Durch aufeinander abgestimmte Bemessung der einzelnen Bremsbelagflächen, der an diesen wirkenden Reibgeschwindigkeiten und der durch den Ausgleichshebel bedingten Übersetzungsverhältnisse ist es bei dieser Scheibenbremse möglich, bezogen auf die einzelnen Bremsbelagabschnitte zueinander einen durch unterschiedliche Reibgeschwindigkeiten bedingten Schrägverschleiß zu vermeiden ; bei der bekannten Scheibenbremse ist es jedoch nicht möglich, auch innerhalb der einzelnen Bremsbelag-Abschnitte unter Berücksichtigung unterschiedlicher Betriebsbedingungen der Scheibenbremse in radialer Richtung und insbesondere in Umfangsrichtung einen Schrägverschleiß zu vermeiden.

Der Erfindung liegt die Aufgabe zugrunde, eine Scheibenbremse der eingangs genannten Art mit einfachen Mitteln derart auszugestalten, daß der Bremsbelag unabhängig von der Betriebsweise der Scheibenbremse stets gleichmäßig verschlissen wird, das Material des Bremsbelages also optimal ausgenutzt wird und die Bremsbeläge dementsprechend selten getauscht werden müssen.

Diese Aufgabe wird nach der Erfindung dadurch gelöst, daß der sich während Bremsungen drehende Bremsbelaghalter um eine die zur Achse für die Kreisscheibenform des Bremsbelages zumindest annähernd gleichachsig verlaufende Belaghalterachse beinhaltende, von der Zuspannvorrichtung belastbare Lagerung drehbar gelagert ist. Bei einer derart ausgebildeten Scheibenbremse rotiert während Bremsungen der Bremsbelaghalter mit dem Bremsbelag um die Belaghalterachse, wodurch eine permanente Lageveränderung des Bremsbelages erfolgt und somit ein Schrägverschleiß sowie Heißstellen ausgeschlossen werden.

Weitere, nach der Erfindung vorteilhafte Ausgestaltungsmöglichkeiten der Scheibenbremse sind den Unteransprüchen entnehmbar. Nach den Merkmalen der Unteransprüche ist es möglich, auch unter Berücksichtigung der Kreisscheibenform ein großes Bremsbelagvolumen und eine große Bremsbelagfläche für die Bremsscheibe vorzusehen.

In der Zeichnung ist ein Ausführungsbeispiel für eine nach der Erfindung ausgebildete Scheibenbremse dargestellt, und zwar zeigt

Figur 1 eine Draufsicht und
Figur 2 einen Teilschnitt.

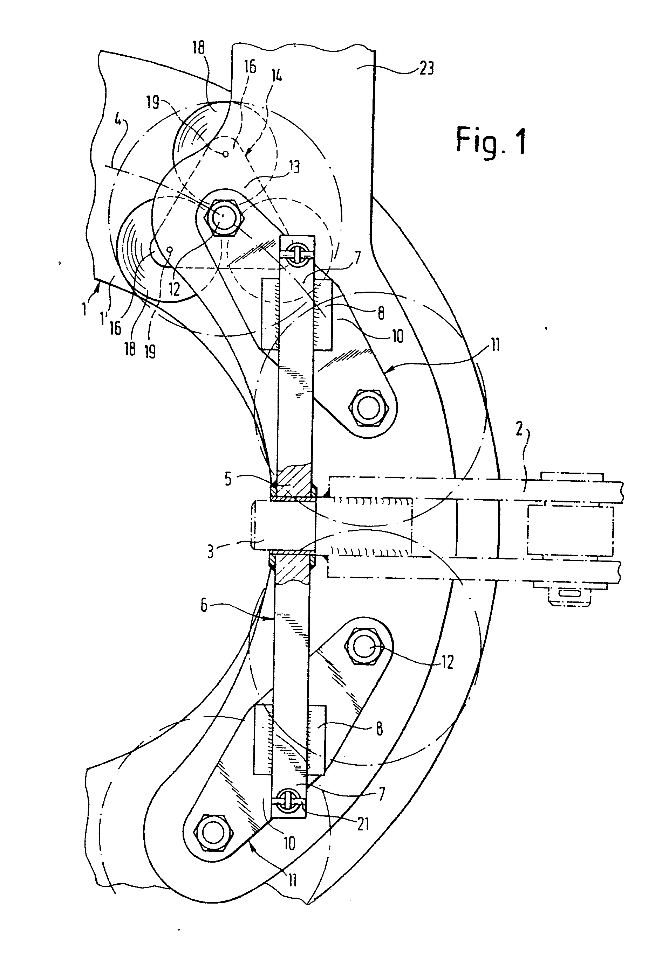

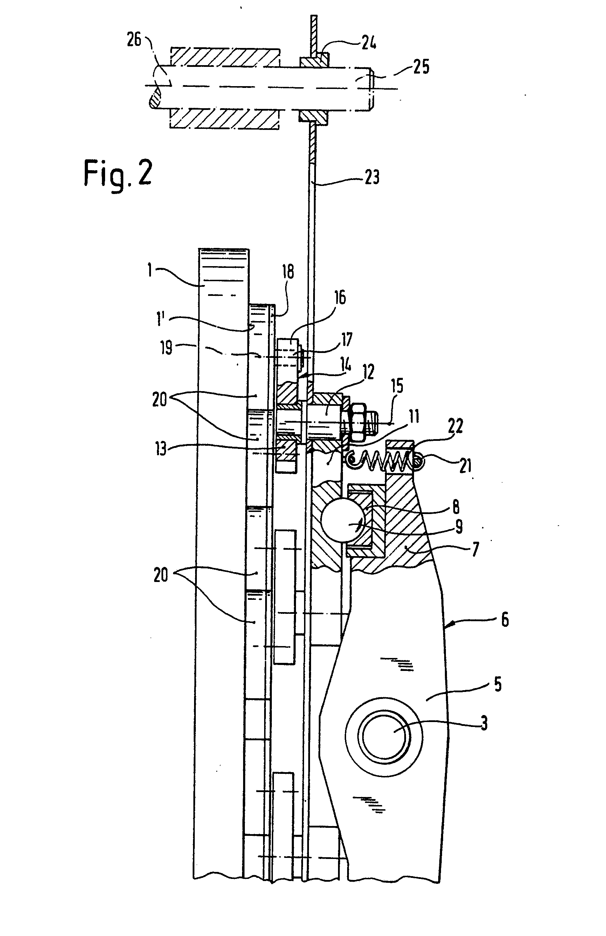

Gemäß Fig. 1 ist das einer Bremsscheibe 1 zugewandte Ende eines Bremshebels 2 mit einem Lagerbolzen 3 versehen, dessen Achse radial zur Bremsscheibe 1 verläuft. Der Bremshebel 2 gehört einer üblichen, im übrigen nicht dargestellten Zuspannvorrichtung für die Scheibenbremse zu ; die Zuspannvorrichtung kann beispielsweise in Art einer Bremszange ausgebildet sein. Von der Bremsscheibe 1 ist im wesentlichen nur deren Reibfläche 1' mit dem mittleren Reibdurchmesser 4 dargestellt. Auf dem Lagerbolzen 3 ist mit seinem Mittelabschnitt 5 ein Druckhebel 6 drehbar gelagert. Der Druckhebel 6 erstreckt sich im wesentlichen parallel zur Reibfläche 1' sehnenartig zum mittleren Reibdurchmesser 4, derart, daß sich seine Enden 7 etwa senkrecht über dem mittleren Reibdurchmesser 4 befinden. An seinen beiden Enden 7 ist der Druckhebel 6 starr mit Lagerpfannen 8 verbunden, wie auch aus Fig. 2 ersichtlich ist. In jeder Lagerpfanne 8 ist eine Kugel 9 gelagert, welche andererseits, auf der der Bremsscheibe 1 zugewandten Seite, in eine zumindest annähernd halbkugelige Ausnehmung im Mittelabschnitt 10 je eines Ausgleichshebels 11 eingreift. Die im Vergleich zum Druckhebel 6 kurzen Ausgleichshebel 11 erstrecken sich etwa tangential zur Bremsscheibe 1, derart, daß sich die Enden der Ausgleichshebel 11 wenigstens annähernd senkrecht über dem mittleren Reibdurchmesser 4 befinden. An ihren Enden tragen die Ausgleichshebel 11 je einen sich senkrecht zur Bremsscheibe 1 hin erstreckenden Lagerbolzen 12, auf welchen das Mittelstück 13 stern- bzw. vieleckartig ausgebildeter Druckstücke 14 drehbar um eine Mittelachse 15 gelagert ist. Die Armabschnitte 16 des Druckstückes 14 — gem. Fig. 1 weist jedes Druckstück 14 in seiner zur Reibfläche 1' parallelen Ebene drei mit gleichem Winkelabstand zueinander auskragende Armabschnitte 16 auf — sind an ihren freien Enden mit je einer Bolzenlagerung 17 versehen, mittels welcher je ein Bremsbelaghalter 18 um eine Belaghalterachse 19 drehbar gelagert ist. Die in der Draufsicht kreisförmigen Bremsbelaghalter 18 sind mit ebenfalls kreisscheibenförmigen Bremsbelägen 20 versehen, wobei die Achse für die Kreisscheibenform der Bremsbeläge 20 mit der Belaghalterachse 19 gleichachsig, jeweils senkrecht zur Reibfläche 1', verläuft.

Ausgehend vom Bremshebel 2 bzw. dessen Lagerbolzen 3 und dem Druckhebel 6 befinden sich die Ausgleichshebel 11, die Druckstücke 14 und die Bremsbelaghalter 18 mit den Bremsbelägen 20 jeweils auf der der Bremsscheibe 1 zugewandten Seite des zuvor genannten, übergeordneten Bauteils, so daß eine vom Bremshebel 2 ausgeübte Zuspannkraft über den Druckhebel 6, die Ausgleichshebel 11, die Druckstücke 14 und die Bremsbelaghalter 18 auf die Bremsbeläge 20 in Andrückrichtung an die Bremsscheibe 1 übertragen werden kann. Um ein Abheben der Kugel 9 von der Lagerpfanne 8 bzw. dem Ausgleichshebel 11 im Lösezustand der Scheibenbremse zu vermeiden, ist zwischen einen an der Stirnseite des Druckhebels 6 befindlichen Bolzen 21 und den Ausgleichshebel 11 jeweils eine Zugfeder 22 eingespannt. Die übrigen Lagerungen an der Scheibenbremse sind derart ausgebildet, daß sie die aneinander gelagerten Teile in jeweiliger Drehachsrichtung aneinander halten.

Zur Ableitung der Reib- bzw. Bremskraft ist eine Hängelasche 23 vorgesehen, welche als sich in einer zur Reibfläche 1' parallelen Ebene erstreckende Blattfeder ausgebildet ist, deren unteres Ende mittels der Lagerbolzen 12 an den Ausgleichshebeln 11 befestigt ist und deren oberes Ende mittels einer Lagerbüchse 24 auf einem Haltebolzen 25 axial verschieblich gelagert ist. Der Haltebolzen 25 weist eine zur Achse der Bremsscheibe 1 parallele Achsrichtung 26 auf und ist starr am im übrigen nicht dargestellten Fahrzeugrahmen befestigt. Die axiale Länge der Lagerbüchse 24 ist bezogen auf den Durchmesser des Haltebolzens 25 klein, sie entspricht etwa dem erwähnten Durchmesser.

Während der Bremsungen drückt die vom Bremshebel 2 ausgeübte Zuspannkraft die Bremsbeläge 20 an die Reibfläche 1' der Bremsscheibe 1 an, wobei die Zuspannkraft über den Druckhebel 6, die Ausgleichshebel 11 sowie die Druckstücke 14 gleichmäßig auf die Bremsbeläge 20 verteilt wird. Infolge der durch unterschiedliche Reibradien zur Bremsscheibe unterschiedlichen Reibgeschwindigkeiten an den einzelnen Stellen der Bremsbeläge 20 sowie der entsprechend unterschiedlichen, mittleren Reibgeschwindigkeiten, bezogen auf die einzelnen Bremsbeläge 20, beginnen die einzelnen Bremsbeläge 20 mit ihren Bremsbelaghaltern 18 um die Bolzenlagerung 17 sowie die Druckstücke 14 um die Lagerbolzen 12 zu rotieren : Jeder Bremsbelag 20 mit seinem Belaghalter 18 rotiert also um die Bolzenlagerung 17 bzw. die Belaghalterachse 19 und die drei jeweils mittels eines Druckstückes 14 miteinander verbundenen Bremsbelaghalter 18 rotieren um ihre gemeinsame Mittelachse 15. Die Drehrichtungen sind dabei derart, daß, bezogen auf die Bremsscheibe 1, das sich jeweils radial äußere Teil des Bremsbelages 20 bzw. Druckstückes 14 in Drehrichtung der Bremsscheibe 1 bewegt.

Die einander überlagerten Drehbewegungen der Druckstücke 14 und der Bremsbelaghalter 18 gewährleisten, daß die Bremsbeläge 20 ihre jeweilige Lage zur Reibfläche 1' ständig ändern, wodurch die Ausbildung von plötzlichen Heißstellen sowie ein Schrägverschleiß — völlig gleichgültig, wodurch er bedingt sein könnte — ausgeschlossen sind.

In Abänderung vom dargestellten und beschriebenen Ausführungsbeispiel ist es natürlich auch möglich, anstelle der vorgesehenen zwölf Bremsbelaghalter 18 mit ebenfalls zwolf Bremsbelägen weniger Bremsbelaghalter und Bremsbeläge vorzusehen : Unter Entfall des Druckhebels 6 und eines Ausgleichshebels 11 sowie den zugehörigen Bremsbelägen könnte der Bremshebel 2 unmittelbar am Mittelabschnitt 10 des verbleibenden Ausgleichshebels 11 angelenkt werden, wodurch die Anzahl der vorgesehenen Bremsbeläge auf 6 Stück halbiert würde ; bei Anlenkung des Bremshebels 2 unmittelbar an einem Druckstück 14 unter Entfall beider Ausgleichshebel 11 sind nur noch 3 Bremsbeläge nötig ; es ist auch möglich, nur einen einzigen Bremsbelag mit Bremsbelaghalter vorzusehen, der um seine Belaghalterachse 19 drehbar unmittelbar am Bremshebel 2 angelenkt ist.

Eine weitere Abänderungsmöglichkeit der Scheibenbremse besteht darin, daß zum Verringern der Lagerstellen die Bremsbelaghalter ähnlich den Druckstücken 14 ausgebildet werden, derart, daß sie von einem Mittelstück auskragende Armabschnitte aufweisen, deren Enden direkt oder indirekt mit jeweils einem Bremsbelag undrehbar verbunden sind. Die Bremsbeläge sind dabei kreisscheibenförmig um die das Mittelstück durchsetzende Belaghalterachse anzuordnen. Es ergibt sich somit eine Anordnung, bei welcher mehrere, beispielsweise drei gleichmäßig verteilt um eine gemeinsame Belaghalterachse angeordnete Bremsbeläge starr miteinander verbunden sind und gemeinsam um die Belaghalterachse rotieren können.

Die während Bremsungen auf die Bremsbeläge 20 einwirkenden Bremskräfte werden über die Druckstücke 14 und die Lagerbolzen 12 auf die Hängelasche 23 übertragen, welche sich im wesentlichen tangential zum mittleren Reibdurchmesser 4 erstreckt, somit nur auf Zug oder Druck beansprucht wird und die Bremskräfte über die Lagerhülse 24 auf den Haltebolzen 25 und damit den Fahrzeugrahmen ableitet. Den Brems- und Lösehüben vermag die` Hängelasche 23 durch entsprechende Verformung ohne Verschiebung der Lagerbüchse 24 auf dem Haltebolzen 25 zu folgen, auf die Lagerbüchse 24 einwirkende Kippmomente verklemmen hierbei die Lagerbüchse 24 auf dem Haltebolzen 25 und schließen eine Axialverschiebung aus. Falls jedoch die Bremsbeläge 20 verschleißen und somit auf die Lagerbüchse 24 ständig eine einseitig wirkende Schiebe- und Klemmkraft ausgeübt wird, bewirken die ständig vorhandenen, beispielsweise aus Fahrerschütterungen resultierenden Stoßbelastungen eine allmähliche Verschiebung der Lagerbüchse 24 auf dem Haltebolzen 25 derart, daß die Hängelasche 23 in eine elastisch unverformte, spannungsfreie Lage gelangt.

**Ansprüche**

1. Scheibenbremse mit wenigstens einem in einem beweglich gelagerten Bremsbelaghalter gehaltenen, vermittels einer Zuspannvorrichtung (2) an eine ringförmige Reibfläche (1') einer Bremsscheibe (1) anpreßbaren, im wesentlichen kreisscheibenförmigen Bremsbelag (20) mit zur Reibfläche (1') senkrecht verlaufender Achse für die Kreisform, dadurch gekennzeichnet, daß der sich während Bremsungen drehende Bremsbelaghalter (18) um eine die zur Achse für die Kreisscheibenform des Bremsbelages (20) zumindest annähernd gleichachsig verlaufende Belaghalterachse (19) beinhaltende, von der Zuspannvorrichtung (2) belastbare Lagerung (17) drehbar gelagert ist.

2. Scheibenbremse nach Anspruch 1, dadurch gekennzeichnet, daß wenigstens drei symmetrisch um eine gemeinsame, zur Reibfläche (1') senkrechte Mittelachse (15) angeordnete Bremsbelaghalter (18) um ihre jeweilige Lagerung (17) drehbar an einem Druckstück (14) gelagert sind und daß das von der Zuspannvorrichtung (2) belastbare Druckstück (14) seinerseits um die Mittelachse (15) drehbar gelagert ist.

3. Scheibenbremse nach Anspruch 2, dadurch gekennzeichnet, daß das Druckstück (14) von einem von der Mittelachse (15) durchsetzten Mittelstück (13) auskragende Armabschnitte (16) aufweist, an deren Enden die Bremsbelaghalter (18) gelagert sind.

4. Scheibenbremse nach Anspruch 2 oder 3, dadurch gekennzeichnet, daß ein wenigstens zweiarmiger Ausgleichshebel (11) vorgesehen ist, an dessen Hebelenden je ein Druckstück (14) an dessen Mittelachse (15) drehbar gelagert ist, und daß der Ausgleichshebel (11) in seinem Mittelabschnitt (10) von der Zuspannvorrichtung (2) belastbar ist.

5. Scheibenbremse nach Anspruch 4, dadurch gekennzeichnet, daß bei zweiarmigem Ausgleichshebel (11) dieser sich etwa tangential zum mittleren Reibdurchmesser (4) der Reibfläche (1') erstreckt.

6. Scheibenbremse nach Anspruch 4 oder 5, dadurch gekennzeichnet, daß zwei Ausgleichshebel (11) vorgesehen sind, die beweglich an den Enden (7) eines sich sehnenartig über den mittleren Reibdurchmesser (4) der Reibfläche (1') erstreckenden Druckhebels (6) angeordnet sind, und daß der Druckhebel (6) in seinem Mittelabschnitt (5) wenigstens um eine zur Reibfläche (1') radiale Drehachse schwenkbar an einem der Zuspannvorrichtung zugehörenden Bremshebel (2) angelenkt ist.

## Claims

1. Disc brake comprising at least one substantially disc-shaped brake pad (20) held in a movably mounted brake pad holder and being capable of application by means of a clamping fixture (2) against a ring-shaped friction surface (1') of a brake disc (1), and the axis of the said brake pad being perpendicular to the friction surface (1') for the circular shape, wherein the brake pad holder (18), which turns during brake applications, is mounted rotatably about a bearing (17) which can be subjected to loading by the clamping fixture (2) and which contains the pad holder axis (19) extending at least approximately coaxially to the axis for the circular shape of the brake pad (20).

2. Disc brake as defined in Claim 1, wherein at least three brake pad holders (18) which are arranged symmetrically about a common centre axis (15) perpendicular to the friction surface (1') are mounted rotatably about their respective bearing (17) on a thrust piece (14) and wherein the thrust piece (14) which can be subjected to loading by the clamping fixture (2) is in turn mounted rotatably about the centre axis (15).

3. Disc brake as defined in Claim 2, wherein the thrust piece (14) has arm sections (16) which project from a centre piece (13) about the centre axis (15), and on the ends of which the brake pad holders (18) are mounted.

4. Disc brake as defined in Claim 2 or Claim 3, wherein there is an at least two-armed compensating lever (11), on each end of which a thrust piece (14) is mounted rotatably at the centre axis (15), and wherein the compensating lever (11) can be subjected to loading in its centre section (10) by the clamping fixture (2).

5. Disc brake as defined in Claim 4, wherein with a two-armed compensating lever (11) the latter extends roughly at a tangent to the centre friction diameter (4) of the friction surface (1').

6. Disc brake as defined in Claim 4 or Claim 5, wherein there are two compensating levers (11) which are arranged movably on the ends (7) of a thrust lever (6) extending like a chord across the centre friction diameter (4) of the friction surface (1'), and wherein in its centre section (5) the thrust lever (6) is hinged pivotably at least about a rotary axis radial to the friction surface (1') on a brake lever (2) belonging to the clamping fixture.

## Revendications

1. Frein à disque avec au moins une garniture de frein (20) maintenue dans un support de garniture de frein, monté avec mobilité, susceptible d'être appliquée, à l'aide d'un dispositif de serrage (2), contre une surface annulaire de friction (1') d'un disque de frein (1), garniture de frein (20) qui possède sensiblement la forme d'un anneau circulaire et présente un axe pour la forme circulaire, qui s'étend perpendiculairement à la surface de friction (1'), caractérisé par le fait que le support de la garniture de frein (18), qui tourne pendant le freinage, est tourillonné autour d'une pièce de montage (17) susceptible d'être chargée par le dispositif de serrage (2) et comportant un axe (19) du support de garniture de frein, qui est au moins approximativement coaxial avec l'axe pour la forme annulaire de la garniture de frein (20).

2. Frein à disque selon la revendication 1, caractérisé par le fait qu'au moins trois supports de garniture de frein (18), disposés symétriquement autour d'un axe médian commun (15) et perpendiculairement à la surface de friction (1'), sont montés à rotation, par l'intermédiaire d'une pièce de montage respective (17), sur une pièce de pression (14), et que la pièce de pression (14) qui est susceptible d'être chargée par le dispositif de serrage (2), est, à son tour, montée à rotation autour de l'axe médian (15).

3. Frein à disque selon la revendication 2, caractérisé par le fait que la pièce de pression (14) comporte des sections de bras (16) en saillie sur une pièce médiane (13) traversée par l'axe médian (15), et sur les extrémités desquelles sont montés les supports de garniture de frein (18).

4. Frein à disque selon la revendication 2 ou 3, caractérisé par le fait qu'il est prévu un levier de compensation (11) à au moins deux bras, à chacune des extrémités duquel est articulée, par son axe médian (15), une pièce de pression (14), et que le levier de compensation (11) est susceptible d'être chargé, en sa section médiane (10), par le dispositif de serrage (2).

5. Frein à disque selon la revendication 4, caractérisé par le fait que dans le cas d'un levier de compensation (11) à deux bras, celui-ci s'étend à peu près tangentiellement au diamètre médian de friction (4) de la surface de friction (1').

6. Frein à disque selon la revendication 4 ou 5, caractérisé par le fait que sont prévus deux leviers de compensation (11) qui sont disposés avec mobilité aux extrémités (7) d'un levier de pression (6) qui s'étend à la manière d'une corde sur le diamètre moyen de friction (4) de la surface de friction (1'), et que le levier de pression (6) est articulé, par sa section médiane (5), sur un levier de freinage (2) appartenant au dispositif de serrage, de façon à pouvoir basculer au moins autour d'un axe de rotation disposé radialement par rapport à la surface de friction (1').

Fig. 1

Fig. 2